# EUROPÄISCHE PATENTSCHRIFT

(11) **EP 0 846 414 B1**
(45) Veröffentlichungstag und Bekanntmachung des Hinweises auf die Patenterteilung: **06.02.2002**
(21) Anmeldenummer: 97118810.7
(22) Anmeldetag: 29.10.1997
(51) Int. Cl.: A01M 21/04

(54) **Gerät zum Vernichten von Unkraut, Wildwuchs, Ungeziefer und Bakterienstämmen**
Device to eradicate weeds, wild plants, pests and bacterial strains
Dispositif pour tuer les mauvaises herbes, plantes sauvages, vermines et souches bactériennes

(30) Priorität: 31.10.1996 CH 270196
(43) Veröffentlichungstag der Anmeldung: 10.06.1998
(73) Patentinhaber: Messerli, Rudolf, 6997 Sessa (CH)
(72) Erfinder: Messerli, Rudolf, 6997 Sessa (CH)
(74) Vertreter: Blum, Rudolf Emil Ernst

(56) Entgegenhaltungen:
- EP-A- 0 437 892
- EP-A- 0 518 038
- LANDBOUWMECHANISATIE , Bd. 34, Nr. 8, August 1983, Seiten 787-789, XP002052040

## Beschreibung

Die vorliegende Erfindung betrifft ein Gerät zum Vernichten von Unkraut, Wildwuchs, Ungeziefer und Bakterienstämmen mittels Hitzeeinwirkung, welches Gerät mindestens eine mit einem Gas-/Luftgemisch beaufschlagte poröse Keramikplatte zur Erzeugung von Infrarotstrahlen durch eine in den Poren der Keramikplatte erfolgende Verbrennung aufweist.

Es ist bekannt, Unkraut und Wildwuchs, beispielsweise Gewächse, die zwischen den Platten eines Gehweges hervorspriessen oder solche bei Randsteinen von Strassen, mittels einem Gerät zu vernichten, in welchem Infrarotstrahlen erzeugt werden. Durch die aufgrund der Infrarotstrahlen entstehende Hitze werden die Pflanzenzellen zum Platzen gebracht, womit die Vernichtung des jeweiligen Unkrauts bzw. Wildwuchs eingeleitet wird. Dabei werden auch reife Samenzellen vernichtet, so dass ein weiteres Keimen verhindert ist. Bei mehrmaliger zeitlich auseinanderliegender Behandlung werden auch die Wurzeln der jeweiligen Pflanzen vernichtet. Auch lässt sich mit solchen Geräten offensichtlich Ungeziefer vernichten, insbesondere in geschlossenen Räumen, beispielsweise Stallungen. Auch können Bakterienstämme vernichtet werden, beispielsweise auf Tennisplätzen oder Flächen, die barfuss betreten werden, z.B. bei Schwimmbädern.

Zum Betrieb des Gerätes wird ein gasförmiger Brennstoff, üblicherweise Propan, Butan oder ein Gemisch derselben einer Mischkammer zugeführt, welcher Brennstoff sich mit Luft vermischt. Nach erfolgter Zündung des Gas-/ Luftgemisches durch einen Funken entsteht in den Poren der Keramikplatte die Verbrennung des Gases, so dass Wärme in Form von Infrarotstrahlen nach unten abgestrahlt wird.

Bekannte solche Geräte sind als tragbare Geräte ausgebildet. Deshalb sind ihre Dimensionen beschränkt und somit sind sie nur für einen kleinflächigen Einsatz brauchbar. Währenddem die Bedienungsperson durch die manuelle Manipulation ein Ausweichen bei auftretenden Hindernissen bewerkstelligen kann, ist dieses bei industriell anwendbaren, nicht tragbaren Geräten aufgrund ihres Gewichtes nicht möglich. Weiter sind die bekannten Geräte nicht gegen Beschädigungen durch z.B. einen im hochgewachsenen Wildwuchs versteckten Stein gefeit.

Hier will die Erfindung Abhilfe schaffen. Die Erfindung, wie sie in den Ansprüchen gekennzeichnet ist. löst die Aufgabe, ein Gerät zum Vernichten von Unkraut, Wildwuchs, Ungeziefer und Bakterienstämmen mittels Hitzeeinwirkung zu schaffen, bei welchem ein jeweiliges Gehäuse, in welchem mindestens eine poröse Keramikplatte angeordnet ist, mittels einer Anlenkvorrichtung mit einem Trägerglied verbunden ist, so dass das Gehäuse bei Auftreffen auf ein Hindernis von der Arbeitsstellung in eine Ausweichstellung bewegbar ist, wobei die Arbeitsstellung des Gehäuses durch ein Federglied bestimmt ist, so dass zusätzlich ein elastisches Ausweichen sichergestellt ist.

Die durch die Erfindung erreichten Vorteile sind im wesentlichen darin zu sehen, dass ein Gehäuse mit einer oder mehrerer poröser Keramikplatten beim Auftreffen auf ein Hindernis dem Hindernis von selbst und elastisch ausweichen kann und selbsttätig aufgrund der Federvorspannung in die Arbeitsstellung zurückkehren kann. Durch die federnde Aufhängung sind Beschädigungen aufgrund von schlagartig auftretenden Stössen weitgehend ausgeschlossen. Weiter lässt sich ein nach der Erfindung ausgebildetes Gerät derart dimensionieren, dass es grossflächig einsetzbar ist, da sein Gewicht in bezug auf Manipulationen unerheblich ist.

Ein jeweiliges Gehäuse kann derart aufgehängt sein, dass es vertikale und auch horizontale Ausweichbewegungen durchführen kann.

Eine bevorzugte Ausführung weist eine Anzahl in nur vertikaler Richtung bewegbare Gehäuse auf. Damit lässt sich ein mehr oder weniger ebenflächiges Areal (mit z.B. herumliegenden Steinen) bearbeiten. Neben diesen Gehäusen ist bei dieser Ausführung ein weiteres Gehäuse angeordnet, das nicht nur in vertikaler Richtung, sondern auch in horizontaler Richtung ausweichen kann. Damit können beispielsweise Obst- und Fruchtkulturen, Weinberge, etc. bearbeitet werden, weil das weitere Gehäuse beim Auftreffen auf einen Rebstock seitlich ausweichen, d.h. den Rebstock umfahren kann. In gleicher Weise kann auch ein gesamter Baumgarten bearbeitet werden. Weiter gibt es agronomische Anlagen, die kreisförmig zu bearbeiten sind. Zur Bearbeitung solcher Anlagen lassen sich gemäss einer weiteren Ausführung des nach der Erfindung ausgebildeten Gerätes die Gehäuse in horizontaler Richtung abgedreht anordnen, um eine lückenlose Bearbeitung auch bei einer Kurvenfahrt sicherzustellen.

Im folgenden wird die Erfindung anhand von mehreren Ausführungswegen darstellenden Zeichnungen beispielsweise näher erläutert.

Es zeigt:
Fig. 1 eine schematische Aufsicht auf ein einfaches Gerät mit einem in zwei Richtungen verschiebbaren Gehäuse, in welchem poröse Keramikplatten angeordnet sind;
Fig. 2 eine schematische Ansicht auf ein einfaches Gerät mit einem nur vertikal verschiebbaren Gehäuse;
Fig. 3 eine Seitenansicht des Gerätes nach Fig. 2;
Fig. 4 eine schematische Aufsicht auf eine bevorzugte Ausführung der Erfindung;
Fig. 5 eine Seitenansicht des mit einem Landwirtschaftlichen Fahrzeug verbundenen Gerätes der Fig. 4;
Fig. 6 eine schematische Aufsicht auf eine Ausführung mit gruppenweise auslenkbaren Gehäusen für Geradeausfahrt;
Fig. 7 eine schematische Aufsicht entsprechend der Fig. 6 mit ausgelenkten Gehäusen;
Fig. 8 eine Ansicht von unten auf ein Gehäuse, in welchem poröse Keramikplatten angeordnet sind; und
Fig. 9 eine Ansicht von vorne auf das Gehäuse nach Fig. 8.

Die Erzeugung von Infrarotstrahlen durch eine mit einem Gas-/Luftgemisch beaufschlagte poröse Keramikplatte ist allgemein bekannt und für Einzelheiten wird beispielsweise auf die EP-A-0 518 038 hingewiesen. In einer Mischkammer wird ein Gas-/Luftgemisch gebildet, welches Gemisch der porösen Keramikplatte bzw. den porösen Keramikplatten zugeführt wird. Zum Starten wird das Gemisch gezündet und brennt in den Poren der porösen Keramikplatte, so dass von dieser Hitze abgegeben wird. Aus Gründen der Klarheit sind in den vorliegenden Zeichnungsfiguren die entsprechenden Bauteile sehr schematisch gezeichnet, da sie insbesonders mit Berufung auf die EP-A-0 518 038 bekannt ist.

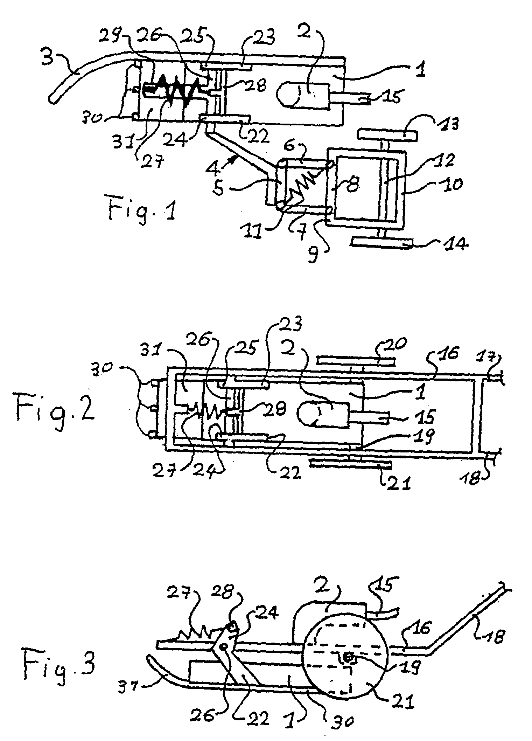

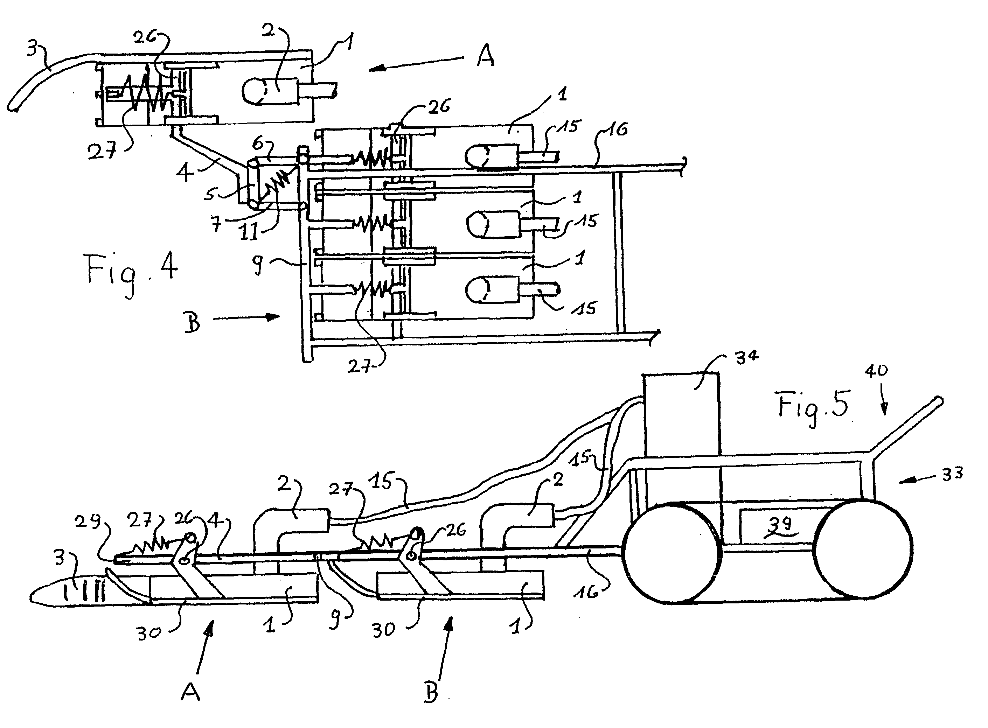

Die bevorzugte Ausführung der Erfindung ist schematisch in den Fig. 4 und 5 dargestellt. Zum besseren Verständnis der Erfindung werden jedoch nachfolgend vorerst einfachere Ausführungsformen beschrieben.

In der schematischen Aufsicht der Fig. 1 bezeichnet die Bezugsziffer 1 ein Gehäuse, in welchem eine oder mehrere poröse Keramikplatten in bekannter Weise angeordnet sind. Die Gas-/Luftmischkammer, welcher das Gas zugeführt wird, ist mit 2 bezeichnet. Das Gehäuse 1 weist vorne eine vertikale stehende, in horizontaler Richtung abgebogen verlaufende Führungsplatte 3 auf. Weiter ist das Gehäuse 1 pendelnd von einem Trägerglied 4 getragen, wobei auf diese pendelnde Aufhängung weiter unten eingegangen wird. Das Trägerglied ist bei dieser Ausführung als Stange ausgebildet, die abgewinkelt verläuft. Diese Stange 4 ist starr mit einem Lenker 5 verbunden; sie kann beim entsprechenden Ende auch einstückig mit diesem Lenker 5 ausgebildet sein. An beiden Enden dieses Lenkers 5 ist jeweils ein weiterer Lenker 6,7 angelenkt. Diese weiteren Lenker 6,7 sind ihrerseits an einer Querstange 9 eines Tragrahmens 10 angelenkt, so dass diese Querstange 9 einen weiteren Lenker(abschnitt) 8 beinhaltet.

Es ist somit ersichtlich, dass die Lenker bzw. Lenkerabschnitte 5,6,7,8 pantographförmig angeordnet sind. Zwei einander diametral gegenüberliegende Anlenkstellen der pantographförmig angeordneten Lenker 5-8 sind über eine Zugfeder 11 miteinander verbunden.

Der schematisch dargestellte Tragrahmen 10 ist von einer Bodenabstützvorrichtung getragen, die hier vereinfacht als Welle 12 mit zwei Rädern 13,14 dargestellt ist. Damit ist ein einfaches Gerät gebildet, das von Hand gestossen werden kann, welches Gerät als eine Karre mit einem porösen Keramikplatten-haltenden Gehäuse 1 bezeichnet werden kann. (Die Handgriffe und das dazugehörige Gestänge sind nicht eingezeichnet.)

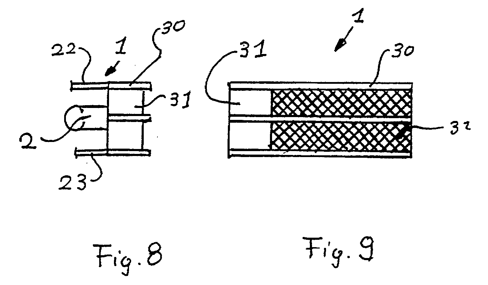

Alle Gehäuse 1 sind in derselben Weise ausgebildet. Sie weisen Kufen 30 auf, wie in der Seitenansicht nach Fig. 3, der Ansicht von vorne nach Fig. 8 und der Ansicht von unten nach Fig. 9 ersichtlich ist. Vorne sind die Kufen 30 schlittenförmig hochgezogen. Beim bogenförmig hochgezogenen Bereich sind die Kufen 30 mit einer bogenförmigen Auflaufplatte 31 verbunden. In der Fig. 9 ist noch das Gitter 32 gezeichnet, welches die porösen Keramikplatten nach unten schützen.

Die Bewegungsrichtung des Gerätes verläuft basiert auf der Darstellung nach Fig. 1 von rechts nach links.

Trifft nun während der Bearbeitung eines Bodens das Gehäuse 1 bzw. der bogenförmig verlaufende Endabschnitt der Führungsplatte 3 (Fig. 1) seitlich auf ein aufrecht stehendes Hindernis, z.B. einen Baumstamm, einen Rebstock, etc., weicht das Gehäuse 1 rechtwinklig zur Fahrtrichtung des Gerätes aus, d.h. bezogen auf die Fahrtrichtung nach Fig. 1 nach links, bzw. in der Darstellung der Fig. 1 nach unten. Dabei wird der Lenker 5 federnd parallel zum Lenkerabschnitt 8 verschoben, womit die Feder 11 gespannt wird. Somit hat sich das Gehäuse 1 von der Arbeitsstellung in eine Ausweichstellung verschoben. Sobald sich das Gehäuse 1 am Baumstamm vorbeibewegt hat, wird es durch die Feder 11 von der Ausweichstellung wieder in die in der Fig. 1 gezeigte Arbeitsstellung zurückbewegt. Somit muss die Fahrtrichtung des insgesamten Gerätes nicht geändert werden, obwohl die Hindernisse "umfahren" werden.

Das Gehäuse 1 nach der Ausführung nach Fig. 1 ist nun nicht nur derart aufgehängt, dass es seitlich ausweichen kann, sondern auch dass es in vertikaler Richtung ausweichen kann.

Zur Erklärung dieser vertikalen Bewegungsfähigkeit von der Arbeitsstellung in die Ausweichstellung wird auf die Figuren 2 und 3 hingewiesen.

Das gezeigte Gerät weist ein Gehäuse 1 auf, in welchem eine oder mehrere poröse Keramikplatten angeordnet sind. Auf dem Gehäuse 1 ist eine Gas-/Luftmischkammer 2 angeordnet, an welcher ein Gaszufuhrschlauch 15 angeschlossen ist. Weiter weist dieses Gerät einen Tragrahmen 16 auf, wobei hier noch schräg aufwärts zu z.B. Handgriffen verlaufende Stangenabschnitte 17,18 eingezeichnet sind. Der Tragrahmen 16 ist von einer vereinfacht mit Welle 19 und Rädern 20,21 angedeuteten Bodenabstützvorrichtung getragen.

Das Gehäuse 1 ist mittels einem Pendelglied, welches erste Arme 22,23 und zweite Arme 24,25 aufweist, pendelnd an einer Tragstange 26 des Tragrahmens 16 aufgehängt.

Zwischen den oberen Enden der zweiten Arme 24,25 erstreckt sich eine Welle 28. Diese Welle 28 ist mit einer Zugfeder 27 verbunden, die beim entgegengesetzten Ende mit dem Tragrahmen 16 verbunden ist.

Bei der Ausführung gemäss der Fig. 1 erstreckt sich von der starr montierten Tragstange 26 eine weitere Stange 29 nach vorne, und die Zugfeder 27 ist dort mit dem vorderen Ende dieser weiteren Stange 29 verbunden, so dass das beschriebene Federsystem der Ausführung nach den Fig. 2 und 3 gleich dem Federsystem nach der Ausführung nach der Fig. 1 ist.

Trifft das in den Fig. 2 und 3 gezeigte Gerät auf ein Hindernis, z.B. einen Stein, gleitet vorerst die Auflaufplatte 31 über das Hindernis. Das Gehäuse 1 wird vorne gegen die Vorspannkraft der Zugfeder 27 hochgeschwenkt. Bewegt sich darauf die Berührungsstelle zwischen dem Zenith des Hindernisses und dem unteren Teil des Gehäuses 1 (wobei die Berührung zwischen dem Hindernis und einer Kufe 30 oder zwischen dem Hindernis und dem in bekannter Weise unter der porösen Platte vorhandenen Gitter 32 stattfinden kann), weiter nach hinten, wird das gesamte Gehäuse 1 unter Mithilfe der Federkraft der Feder 27 hochgehoben und gleitet über das Hindernis. Wenn das Gehäuse 1 vollständig über das Hindernis hinweggeglitten ist, senkt es sich wieder vollständig auf den Boden zurück. Die Arme 22,23 sind derart in Bezug auf das Gehäuse 1 und den Tragrahmen 16 bemessen und die Tragstange 26 an einer solchen Stelle angeordnet, dass sich das durch ein Hindernis nach oben und auch nach hinten gedrückte Gehäuse 1 an der Tragstange vorbeibewegen kann. Hat sich das Gehäuse 1 schlussendlich bei der Weiterfahrt vom Hindernis entfernt, kann es sich aufgrund seines Eigengewichtes wieder in die Arbeitsstellung bewegen.

Die bevorzugte Ausführung des erfindungsgemässen Gerätes ist in der Fig. 4 in der Aufsicht und in der Fig. 5 in der Seitenansicht dargestellt. Es ist ersichtlich, dass die Konstruktion einerseits nach Fig. 1 und andererseits nach den Fig. 2 und 3 in einem Gerät zusammengefasst sind.

Mit dem Pfeil A ist der Geräteteil nach Fig. 1 bezeichnet. Der Pfeil B bezeichnet den grundsätzlich nach den Fig. 2 und 3 ausgebildeten Geräteteil.

Währenddem der Geräteteil A identisch zur Ausbildung nach Fig. 1 ausgebildet ist, weist der Geräteteil B drei nebeneinander angeordnete Gehäuse 1 auf, die in einem gemeinsamen Tragrahmen 16 getragen sind. In jedem der Gehäuse 1 des gesamten Gerätes sind mehrere poröse Keramikplatten angeordnet. Mit dem Geräteteil B kann eine Bodenbreite von mehreren Metern behandelt werden.

Die drei Gehäuse 1 des Geräteteils B sind unabhängig voneinander pendelnd an der Tragstange 26 aufgehängt. Der offensichtlich rein schematisch gezeichnete Tragrahmen 16 ist von einem ebenfalls schematisch gezeichneten landwirtschaftlichen Fahrzeug 33 mit eigenem Antrieb 39 verbunden. Auf dem landwirtschaftlichen Fahrzeug 33 ist ein Behälter 34 für das über die flexiblen Leitungen 15 der verschiedenen Gehäusen 1 zuzuführende Gas angeordnet. Der Sitz der Bedienungsperson ist schematisch mit der Bezugsziffer 40 angedeutet.

Im Betrieb kann sich nun das Gehäuse 1 des Geräteteiles A, wenn es auf ein aufrecht stehendes Hindernis auftrifft, z.B. einen Baumstamm oder ein Rebstock, gegen die Vorspannkraft der Feder 11, in horizontaler Richtung gegen den Tragrahmen 16 bewegen. Hat sich das Gehäuse 1 des Geräteteiles A am Hindernis vorbeibewegt, wird es durch die Federkraft der Feder 11 von der Ausweichstellung (vor dem Tragrahmen 16 bzw. dessen Gehäuse!) wieder in die Arbeitsstellung zurückbewegt.

Alle Gehäuse 1, d.h. diejenigen des Geräteteiles A und diejenigen des Geräteteiles B sind gemäss der Ausführung nach den Fig. 2 und 3 pendelnd aufgehängt. Beim Auftreffen auf ein Hindernis können alle Gehäuse 1 durch ein Ausweichen in vertikaler Richtung über das jeweilige Hindernis hinweggleiten.

Das Gehäuse 1 des Geräteteiles A kann sich somit horizontal und vertikal bewegen, also von der Arbeitsstellung in zwei Ausweichstellungen verschieben. Die Gehäuse 1 des Geräteteiles B können sich nur vertikal bewegen.

Die durch die in den porösen Keramikplatten erfolgende Verbrennung enstehende Temperatur beträgt ca. 1050°C, womit das Vernichten von Unkraut, Wildwuchs, Ungeziefer und Bakterien sichergestellt ist.

Währenddem die Feder 11 des Geräteteiles A (Fig. 1) dazu dient, das Gehäuse 1 von der Ausweichstellung in die Arbeitsstellung zurückzuführen, dienen die Federn 27 dazu, den Bodendruck der Gehäuse 1 festzulegen.

Grundsätzlich liegen alle Gehäuse 1 aufgrund ihrer Schwerkraft auf dem Boden auf, jedoch wäre diese Kraft zu gross für ein Manövrieren. Aus diesem Grund sind sie durch die Federn 27 entlastet. Die Vorspannung dieser Federn 27 ist in bekannter Weise (z.B. Schraubgewinde) wählbar. Diese Federn 27 sind nun vorteilhaft derart vorgespannt, dass die Anlagekraft der Gehäuse 1 auf dem Boden im Bereich von 0,5 bis 2,5 Newton beträgt. Somit bestimmen grundsätzlich die Federn 27 die Arbeitsstellung der Gehäuse 1 bezüglich der vertikalen Richtung.

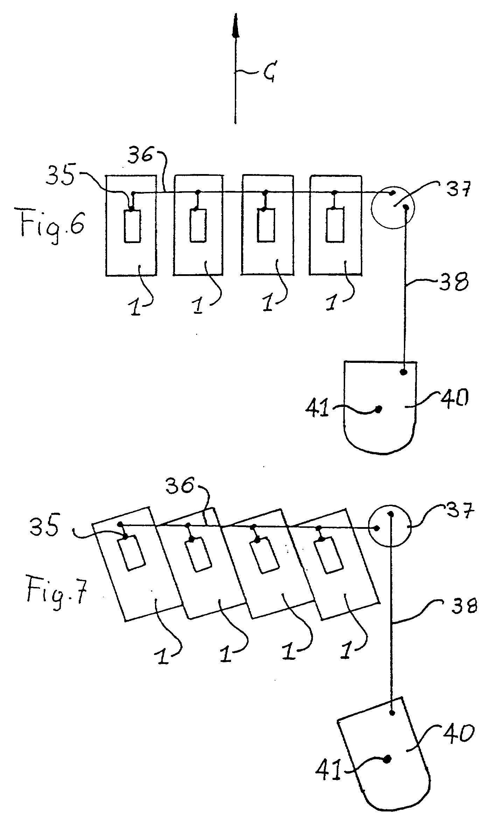

Eine weitere Variante ist in den Fig. 6 und 7 schematisch in der Aufsicht dargestellt. Die Gehäuse 1 sind um eine Schwenkstelle 35 schwenkbar mit einer verschiebbaren Tragstange 36 verbunden. Der Pfeil G bezeichnet die Fahrtrichtung. Die Stange 36 ist an einer Drehscheibe 37 angelenkt. Weiter ist eine Steuerstange 38 an dieser Drehscheibe 37 angelenkt.

Es gibt bekanntlich agronomische Bodenflächen, die kreisförmig vorliegen und die einem spiralförmigen Weg folgend zu bearbeiten sind.

In der Stellung der Gehäuse 1 nach Fig. 6 ist eine Behandlung einer Fläche in einer Geradeausfahrt des Gerätes wie oben beschrieben möglich.

Um einem spiralförmigen Weg zu folgen werden die Gehäuse 1 durch ein Verschieben der Steuerstange 38 geschwenkt, d.h. schräggestellt.

Damit ist sichergestellt, dass bei der Kurvenfahrt keine seitlichen Kräfte auf die Gehäuse 1 einwirken, d.h. dass ein Hindernis durch die Gehäuse 1 von vorne und nicht seitlich angefahren wird, weil im letzten Fall eine Ausweichbewegung nicht sichergestellt ist.

Der Sitz 40 für die Bedienungsperson ist um die Drehstelle 41 drehbar. Damit kann die Bedienungsperson während der Kurvenfahrt immer in Fahrtrichtung blikken. Die Steuerstange 38 ist am Sitz 40 angelenkt. Folglich wird die Stellung der Gehäuse 1 durch die Stellung des Sitzes 40 und somit letztlich automatisch durch die von der Bedienungsperson gewählte Stellung bestimmt.

## Patentansprüche

1. Gerät zum Vernichten von Unkraut, Wildwuchs, Ungeziefer und Bakterienstämmen mittels Hitzeeinwirkung, welches Gerät mindestens ein mit einem Gas-/ Luftgemisch beaufschlagte poröse Keramikplatte zur Erzeugung von Infrarotstrahlen durch eine in den Poren der Keramikplatte erfolgende Verbrennung aufweist, welche Keramikplatte in einem Gehäuse (1) getragen ist, **dadurch gekennzeichnet, dass** das Gehäuse (1) mittels mindestens einer Anlenkvorrichtung (5-8; 22-25) mit einem Trägerglied (4;16) verbunden ist, damit das Gehäuse (1) zwischen einer Arbeitsstellung und mindestens einer Ausweichstellung bewegbar ist, und dass die Anlenkvorrichtung (5-8; 22-25) ein die Arbeitsstellung des Gehäuses steuerndes Federglied (11; 27) aufweist, und welches Trägerglied (4; 16) zur direkten oder indirekten Verbindung mit einer Bodenabstützvorrichtung (12-14; 19-21; 33) ausgebildet ist.

2. Gerät nach Anspruch 1, **dadurch gekennzeichnet, dass** die Anlenkvorrichtung (22-25) mindestens ein Pendelglied aufweist, mittels welchem das Gehäuse (1) pendelnd am Trägerglied (16) aufgehängt ist, und dass sich das Federglied (27) zwischen dem Pendelglied (22-25) und dem Gehäuse (1) erstreckt.

3. Gerät nach Anspruch 2, **dadurch gekennzeichnet, dass** das Pendelglied (22-25) erste, vom Trägerglied (16) zum Gehäuse (1) verlaufende Arme (22,23) aufweist, die mit dem Gehäuse (1) verbunden sind, und zweite, relativ zu den ersten in einer mindestens annähernd entgegengesetzten Richtung verlaufende zweite Arme (24,25) aufweist, die über dem Federglied (27) mit dem Gehäuse (1) in Verbindung stehen.

4. Gerät nach einem der vorangehenden Ansprüche, **dadurch gekennzeichnet, dass** das Trägerglied (16) als Teil eines zur direkten Verbindung mit der Bodenabstützvorrichtung (33) ausgebildenten Tragrahmens ausgebildet ist.

5. Gerät nach einem der vorangehenden Ansprüche, **dadurch gekennzeichnet, dass** das Trägerglied (4) über pantographförmig angeordnete Lenkerabschnitte (5-8) mit einem zur direkten Verbindung mit der Bodenabstützvorrichtung ausgebildeten Tragrahmen (10) in Verbindung steht, und dass sich ein weiteres Federglied (27) zwischen zwei einander diametral gegenüberliegende Anlenkstellen der Lenkerabschnitte (5-8) erstreckt und bei einem Ende mit einer dieser Anlenkstellen und beim entgegengesetzten Ende mit einer anderen der Anlenkstellen verbunden ist.

6. Gerät nach Anspruch 5, **dadurch gekennzeichnet, dass** ein erster (8) der pantographförmig angeordneten Lenkerabschnitte durch einen Abschnitt eines zur direkten Verbindung mit der Bodenabstützung ausgebildeten Tragrahmens (10) gebildet ist, und dass ein zweiter, dem ersten gegenüberliegenden Lenkerabschnitt (5) mit dem Trägerglied (4) starr verbunden ist, mit welchem eine Anlenkvorrichtung (22-25) verbunden ist.

7. Gerät nach einem der vorangehenden Ansprüchen, **dadurch gekennzeichnet, dass** es mindestens ein Gehäuse (1) aufweist, das mit einem Trägerglied (16) verbunden ist, das Teil eines zur direkten Verbindung mit der Bodenabstützvorrichtung (33) ausgebildeten Tragrahmens ausgebildet ist, und mindestens ein weiteres Gehäuse (1) aufweist, das pendelnd mit einem Trägerglied (4) verbunden ist, welches Trägerglied (4) seinerseits über pantographförmig angeordnete Lenker (5-8) mit einem zur direkten Verbindung mit der Bodenabstützvorrichtung (33) ausgebildeten Tragrahmen (16) in Verbindung steht, so dass das weitere Gehäuse (1) in unterschiedlichen Richtungen zwischen einer Arbeitsstellung und zwei Ausweichstellungen bewegbar ist.

8. Gerät nach einem der vorangehenden Ansprüche, **dadurch gekennzeichnet, dass** das Gehäuse (1) Kufen (30) aufweist, mittels welchen ein festgelegter Abstand zwischen der Hitze abstrahlenden Unterseite des porösen Steines und einer jeweiligen Bodenoberfläche beibehaltbar ist.

9. Gerät nach einem der vorangehenden Ansprüche, **dadurch gekennzeichnet, dass** die Federvorspannung jedes Federgliedes (11; 27) selektiv festlegbar ist.

10. Gerät nach einem der vorangehenden Ansprüchen, **dadurch gekennzeichnet, dass** das Gehäuse (1) sowohl pendelnd als auch in einer horizontalen Ebene schwenkbar mit einem Trägerglied (4) verbunden ist, das als Teil eines zur direkten Verbindung mit der Bodenabstützvorrichtung ausgebildeten Tragrahmens (10) ausgebildet ist.

11. Gerät nach einem der vorangehenden Ansprüche, **dadurch gekennzeichnet, dass** in einem jeweiligen Gehäuse (1) mehrere poröse Steine angeordnet sind.

12. Gerät nach einem der vorangehenden Ansprüche, **dadurch gekennzeichnet, dass** die Gehäuse (1) in einer horizontal verlaufenden Ebene schwenkbar angeordnet sind.

13. Fahrbare, motorgetriebene landwirtschaftliche Bodenbearbeitungsvorrichtung mit einem Gerät nach Anspruch 1, dessen Gehäuse (1) in einer horizontal verlaufenden Ebene schwenkbar angeordnet sind, **gekennzeichnet durch** einen in einer horizontal verlaufenden Ebene drehbar angeordneten Sitz (40) für eine Bedienungsperson, welcher Sitz (40) über Steuerglieder (36,37,38) mit dem schwenkbaren Gehäuse (1) **durch** die Drehstellung des Sitzes (40) gesteuert ist.

## Claims

1. Device to eradicate weeds, wild plants, pests and bacterial strains by means of an influence of heat, which device includes at least one ceramics plate acted upon by a gas-air mixture for the generation of infra red rays for a combustion taking place in the pores of the ceramics plate, which ceramic plate is supported in a housing (1), **characterised in that** the housing (1) is mounted by means of at least one hinge device (5-8; 22-25) to a supporting member (4; 16), so that the housing (1) is moveable between an operating position and a at least one yielding position, and **in that** the hinge device (5-8; 22-25) includes a spring member (11; 27) which controls the operating position of the housing, and which supporting member (4; 16) is designed for a direct or indirect connection to a device (12-14; 19-21; 33) for support on the ground.

2. Device according to claim 1, **characterised in that** the hinge device (22-25) includes at least one pendulum member by means of which the housing (1) is supported in a pendulating manner at the supporting member (16), and **in that** the spring member (27) extends between the pendulum device (22-25) and the housing (1).

3. Device according to claim 2, **characterised in that** the pendulum device (22-25) includes first arms (22,23) mounted to the housing (1) and extending from the supporting member (16) to the housing (1), and second arms (24,25) extending relative to the first ones in a at least approximately opposite direction, which are connected to the housing (1) through the spring member (27).

4. Device according to one of the preceding claims, **characterised in that** the supporting member (16) is structured as a part of a supporting frame designed for a direct mounting to the device (33) for support on the ground.

5. Device according to one of the preceding claims, **characterised in that** the supporting member (4) is connected through pantograph-like arranged linkage portions (5-8) to a supporting frame (10) designed for a direct connection to the device for support on the ground, and **in that** a further spring member (27) extends between two pivotal points of the linkage portions (5-8) located diametrically opposite of each other, and is mounted at one end to one of these pivotal points and at the other end to a different pivotal point.

6. Device according to claim 5, **characterised in that** a first (8) of the pantograph-like arranged linkage portions is formed by a section of the supporting frame (10) designed for a direct connection to the device for support on the ground, and **in that** a second linkage portion (5) located opposite of the first one is rigidly mounted to the supporting member (4) onto which a hinge device (22-25) is mounted.

7. Device according to one of the preceding claims, **characterised in that** it includes at least one housing (1) which is mounted to a supporting member (16) which is structured a part of a supporting frame for a direct connection with the device (33) for support on the ground, and includes at least one further housing (1) which is mounted pedulating to a supporting member (4), which supporting member (4) is connected in turn through pantograph-like arranged linkages (5-8) to a supporting frame designed for a direct connection to the device (33) for support on the ground, so that the further housing (1) is moveable in various directions between an operating position and two yielding positions.

8. Device according to one of the preceding claims, **characterised in that** the housing (1) includes runners (30) by means of which a predetermined distance between the heat radiating bottom side of the porous stone and a respective ground surface can be maintained.

9. Device according to one of the preceding claims, **characterised in that** the spring bias of each spring member (11; 27) is selectably settable.

10. Device according to one of the preceding claims, **characterised in that** the housing (1) is mounted to a supporting member (4) which is structured for a direct mounting to the supporting frame (10) designed for a direct mounting to the device for support on the ground in a pendulating manner and pivotable in a horizontal plane, as well.

11. Device according to one of the preceding claims, **characterised in that** a plurality of porous stones are arranged in a respective housing (1).

12. Device according to one of the preceding claims, **characterised in that** the housings (1) are arranged to pivot in a horizontally extending plane.

13. Travelable, motor driven agricultural ground treatment device with a device according to claim 1, of which the housings (1) are arranged pivotable in a horizontally extending plane, **characterised by** a seat (40) for an operating person which is rotatable in a horizontally extending plane, which seat (40) is controlled through control members (36,37,38) to the rotatable housing (1) by the rotational position of the seat (40).

## Revendications

1. Appareil pour détruire par la chaleur des mauvaises herbes, de la vermine et des souches de bactéries, cet appareil comportant au moins une plaque en céramique poreuse balayée par un courant formé d'un mélange d'air et de gaz pour produire un rayonnement infrarouge par combustion dans les pores de la plaque de céramique maintenue dans un bâti (1), **caractérisée en ce que** le bâti est réuni par au moins un dispositif d'accouplement (5-8; 22-25) à au moins un organe porteur (4; 16) pour que le bâti (1) soit mobile entre une position de travail et au moins une position d'évitement, et que le dispositif d'accouplement (5-8; 22-25) comporte un organe élastique (11; 27) commandant la position de travail du bâti, l'organe porteur (4; 16) étant agencé pour être directement ou indirectement relié à un ensemble (12-14; 19-21; 33) s'appuyant sur le sol.

2. Appareil selon la revendication 1, **caractérisée en ce que** le dispositif d'accouplement (22-25) comporte au moins un organe pendulaire au moyen duquel le bâti (1) est suspendu de manière pendulaire à l'organe porteur (16), et que l'organe élastique (27) s'étend entre l'organe pendulaire (22-25) et le bâti (1).

3. Appareil selon la revendication 2, **caractérisée en ce que** l'organe pendulaire (22-23) comporte des premiers bras (22, 23) s'étendant de l'organe porteur (16) au bâti (1) et réunis à ce dernier, et des seconds bras (24, 25) qui s'étendent en une direction au moins approximativement opposée à celle des premiers bras et qui sont reliés au bâti (1) par l'intermédiaire de l'organe élastique (27).

4. Appareil selon une des revendications précédentes, **caractérisée en ce que** l'organe porteur (16) forme une partie d'un châssis porteur agencé pour servir directement de connection avec l'ensemble (33) d'appui sur le sol.

5. Appareil selon une des revendications précédentes, **caractérisée en ce que** l'organe porteur (4) est relié par des organes directionnels (5-8) formant un pantographe à un châssis porteur (10) agencé pour être directement relié à l'ensemble d'appui sur le sol, et qu'un autre organe élastique (27) s'étend entre deux points d'attache diamétralement opposés des organes directionnels (5-8) et est réuni à une extrémité à un de ces points d'attache et à son extrémité opposée avec un point d'attache différent.

6. Appareil selon la revendication 5, **caractérisée en ce qu'**un premier (8) des organes directionnels disposés en pantographe est formé par une section d'un châssis porteur (10) agencé pour être directement relié à l'ensemble d'appui sur le sol, et **en ce qu'**un second (5) organe directionnel faisant face au premier est rigidement relié à l'organe porteur (4) auquel est relié un dispositif d'accouplement (22-25).

7. Appareil selon une des revendications précédentes, **caractérisée en ce qu'**il comporte au moins un bâti (1) réuni à un organe porteur (16) formant partie d'un châssis porteur agencé pour être directement relié à l'ensemble (33) d'appui sur le sol, et qu'il comporte au moins un autre bâti (1) réuni de façon pendulaire avec un organe porteur (4) lui-même connecté par l'intermédiaire l'organes directionnels (5-8) formant un pantographe avec un châssis porteur (16) agencé pour être directement relié à l'ensemble (33) d'appui sur le sol, de manière à ce que l'autre bâti (1), puisse se mouvoir en des directions différentes entre une position de travail et deux positions d'évitement.

8. Appareil selon une des revendications précédentes, **caractérisée en ce que** le bâti (1) comporte des patins (30) permettant de maintenir une distance déterminée entre la face inférieure de la plaque poreuse rayonnant de la chaleur et la surface du sol.

9. Appareil selon une des revendications précédentes, **caractérisée en ce que** la prétension élastique de chaque organe élastique (11; 27) peut être déterminée sélectivement.

10. Appareil selon une des revendications précédentes, **caractérisée en ce que** le bâti (1) est relié à un organe porteur (4) de façon pendulaire et aussi de manière à pouvoir pivoter dans un plan horizontal, l'organe porteur formant une partie d'un châssis porteur (10) agencé pour être directement réuni à l'ensemble d'appui sur le sol.

11. Appareil selon une des revendications précédentes, **caractérisée en ce que** plusieurs pierres poreuses sont disposées dans un même bâti (1).

12. Appareil selon une des revendications précédentes, **caractérisée en ce que** les bâtis (1) peuvent pivoter dans un plan horizontal.

13. Engin agricole automoteur pour le traitement du sol avec un appareil selon la revendication 1 dont les bâtis sont agencés pour pouvoir pivoter dans un plan horizontal, **caractérisée par** un siège (40) pour un opérateur, siège pouvant tourner dans un plan horizontal et dont la positon angulaire commande celle du bâti pivotant par l'intermédiaire d'organes de commande (36, 37, 38).
